# EUROPEAN PATENT APPLICATION

(11) **EP 2 405 648 A1**
(43) Date of publication of application: **11.01.2012**
(21) Application number: 10191105.5
(22) Date of filing: 12.11.2010
(51) Int. Cl.: H04N 5/765, H04N 5/775, H04N 5/00, G06F 3/14, G09G 5/00, H04N 7/16

(54) **Multifunction device for display device**

(30) Priority: 08.07.2010 EP 10168949
(71) Applicant: Nagravision S.A., 1033 Cheseaux-sur-Lausanne (CH)
(72) Inventor: Nicolas, Christophe, 1162 St-Prex (CH); Kudelski, André, 1095 Lutry (CH)
(74) Representative: Leman Consulting S.A.

(57) **Abstract**

The present invention proposes a multifunction device for television comprising an input (IN) for receiving audio/video data from an audio/video data source, and an output (OUT) for outputting audio/video data to a display device, further comprising communication means for accessing Internet or a local area network for collecting additional data, the multifunction device comprising video processing means to receive a first image from the input and means to create a second image to be outputted to the output (OUT), this second image being formed by the all or part of the first image and the data collected via Internet, said multifunction device being connected and powered by the CI+ interface of the display device.

## Description

### Introduction

The televisions today are no longer limited to the display of broadcasted programs. The users are willing to use this wide screen to access the almost infinite resources provided by the Internet. However, the majority of already sold televisions are not equipped with Internet access and are unable to take advantage of these resources.

### Prior art

A solution was proposed in the form of an external device connected in one side to the Internet via Ethernet or wifi, and on the other side output de data in a form suitable for the television, i.e. HDMI.

This external device has its own remote control, power supply and cable and tend to complicate and to clutter up the space around the television.

### Brief description of the invention

The present invention proposes a multifunction device for television comprising an input (IN) for receiving audio/video data from an audio/video data source, and an output (OUT) for outputting audio/video data to a display device, further comprising communication means for accessing Internet or a local area network for collecting additional data, the multifunction device comprising video processing means to receive a first image from the input and means to create a second image to be outputted to the output (OUT), this second image being formed by the all or part of the first image and the data collected via Internet, said multifunction device being connected and powered by the CI+ interface of the display device.

### Brief description of the figure

The present invention will be better understood thanks to the attached figure in which the multifunction module is illustrated as a compact module attached to the display device.

### Detailed description of the invention

The present invention proposes a multifunction device for accessing Internet resources having a connection compliant with CI+ allowing a direct connection with a display device, this multifunction device further comprising an input for receiving audio/video data, and an output to send audio/video data, and an Internet access means to connect the multifunction device with Internet, said multifunction device comprising means to generate an audio/video signal overlaying or replacing the received audio/video data from the data received from Internet, and means to transmit said video signal to the audio/video output.

### Detailed description

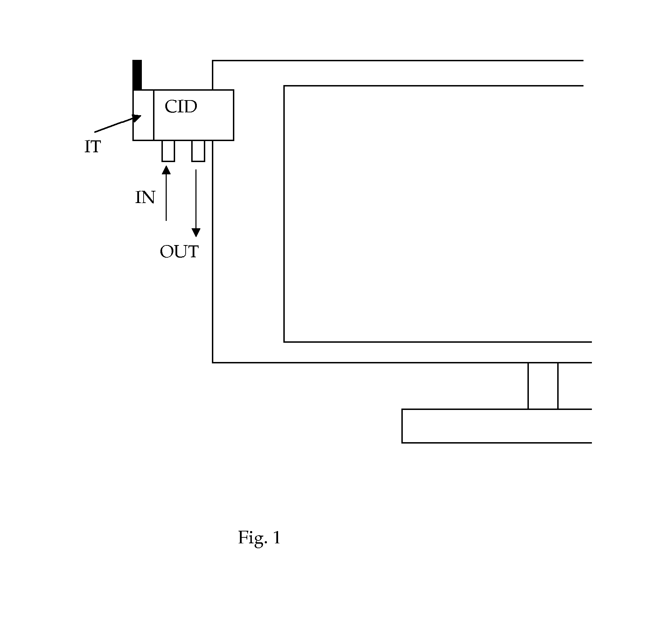

The figure 1 illustrates the multifunction device CID. This device is connected to the standard CI+ interface already present in a lot of televisions. The power is taken from the television to supply the various circuits within the multifunction device. This multifunction device comprises three main connections. The first one is the Internet interface IT. In the example illustrated in the figure 1, the multifunction device comprises a wireless interface. However, this interface can be also an Ethernet (wired) connection (e.g. TCP/IP protocol) or a powerline. This interface allows gathering information from the Internet resources. Video products can also be downloaded and displayed to the display device thanks to this interface.

The multifunction device comprises a second connection which is an input for audio/video data. This input is generally connected to a video source such as a DVD player, a Set-top-box, a PVR, a game set, a computer i.e. any device that produces audio/video data to be displayed. One of the formats generally used is the HDMI but the present invention is not limited to this interface and can also comprise other formats such as TS (Transport Stream).

The third connection is directed to the display device, and the audio/video data processed by the multifunction device are outputted toward the display device. The format used can be HDMI or any suitable video format.

The multifunction device comprises mainly three modes. The pass though mode, the overlay mode and the Internet/Network mode.

In the pass-through mode, the audio/video data entering into the multifunction device are simply outputted to the output of said device without modification.

In the overlay mode, the inputted HDMI is processed to forms a first image which correspond with the image received by this input, the processing circuit collect information from the Internet to create a second image, the first and the second image are merged in a single image and this resulting image is sent to the output.

It is to be noted that the merge can take different forms, such as a superposition of both images, or each image takes a specific area of the full image format (picture in picture mode, splitted screen, 3D - multi screen selection, etc..).

In the Internet/Network mode, the data outputted to the output are resulting of the data collected via Internet or the local area network. The data coming from the input IN are ignored and only the data collected from Internet are sent to the output.

In one embodiment, the Internet interface is connected to a hub (or a local network) allowing to access Internet as well as other device within the vicinity. As a consequence, the video source as described above, transmit the audio/video data through the hub and then to the Internet interface of the multifunction device. The preferred format is a compressed format (example TS), however, it is also possible to transmit, via the Internet interface uncompressed audio/video data. The Internet data are also collected via the Internet interface, said interface acting as a network interface.

The display device is controlled by a remote control. One particularity of the CI+ interface is to reroute the remote control user's commands received by the display device. The multifunction device comprises a command input to receive the user's commands. Various actions can be taken in reaction to the received commands.

These commands can serve to specify the data collected via Internet (e.g. download a widget, access a weather forecast site), or to organize the data collected via Internet in view of the incoming audio/video input. This can be in the form of moving to the left corner a widget, activating it or defining a window with the Internet data and another windows with the incoming audio/video input.

In another embodiment, these commands are then sent to the video source via the Internet interface. The video source can then react to the commands sent by the user as long as these commands refer to the video source. This is the case if the video source is a receiver/decoder in charge of receiving broadcast audio/video data (free to air or conditional access data). In this case the display device plays the role of a monitor only and the selection of the channels is made directly by the receiver/decoder. The multifunction device thus relays the commands up to the receiver/decoder. A single remote control can then control the display device as well as the receiver/decoder.

Several commands can be directed for the management of the multifunction device. This is the case for selecting one of the three modes (pass-through, overlay or Internet) or selecting the size of each window in the overlay mode. In case of accessing Internet data, the remote control can plays the role of a keyboard. The command sent by the remote control are received by the display device and then passed to the multifunction device. While accessing Internet, these commands allow the selection of web site, enter search criteria etc.

According to an embodiment of the invention, the receiver/decoder and the multifunction device share common secret keys to secure the communication between both devices. The output of the receiver/decoder is further encrypted according to this secret key and the multifunction device decrypts the encrypted audio/video data before passing them to the output. The secure connection between the receiver/decoder and the multifunction device creates a mating between both devices and only these two devices can work together.

The initialisation of the secret keys can be done through various ways :
- the multifunction device is locally connected with the receiver/decoder to exchange keys. The receiver/decoder comprises a CI+ connector for that purpose. The generated keys are then stored on both sides.
- The multifunction device detects the presence of the receiver/decoder and obtains an identification of same. The multifunction device then sends a message to a management center requesting the initialisation with the receiver/decoder, this message comprising the identification of the receiver/decoder and the identification of the multifunction device. In return, the management center sends a message, pertaining to the multifunction device and encrypted by a personal key of said device. The message contains the secret keys needed to communicate with the receiver/decoder. The receiver/decoder takes the same action with the identification of the multifunction device and its identification, and receives the initialisation message. Both multifunction device and receiver/decoder are ready to communicate.

## Claims

1. Multifunction device for television comprising an input (IN) for receiving audio/video data from an audio/video data source, and an output (OUT) for outputting audio/video data to a display device, further comprising communication means for accessing Internet or a local area network for collecting additional data, the multifunction device comprising video processing means to receive a first image from the input and means to create a second image to be outputted to the output (OUT), this second image being formed by the all or part of the first image and the data collected via Internet, said multifunction device being connected and powered by the CI+ interface of the display device.

2. Multifunction device of claim 1, wherein the means for accessing Internet or a local area network are wireless.

3. Multifunction device of claim 1, wherein the means for accessing Internet or a local area network is an Ethernet network interface.

4. Multifunction device of any of the claims 1 to 3, wherein the interface with the display device comprises a command input, said command input receiving user's commands sent by the user to the display device and forwarded to the multifunction device.

5. Multifunction device of claim 4, wherein the user's commands allow to define the data collected via Internet.

6. Multifunction device of claim 4 or 5, wherein the user's commands allow to define the part of the first image into the second image.

7. Multifunction device of any of the claims 1 to 6, wherein it comprises storage and decryption means, said decryption means acting on the aucdio/video data entering from the input to produce decrypted audio/video data for the output, said decryption means receiving a secret key stored in the storage means.

8. Multifunction device of any of the claims 1 to 7, wherein the input and output are of the HDMI type.
